# EUROPÄISCHE PATENTANMELDUNG

(11) **EP 2 055 416 A1**
(43) Veröffentlichungstag der Anmeldung: **06.05.2009**
(21) Anmeldenummer: 08105449.6
(22) Anmeldetag: 26.09.2008
(51) Int. Cl.: B23B 47/34, B23Q 11/00

(54) **Verfahren zum spanenden Bearbeiten eines Durchgangslochs**

(30) Priorität: 31.10.2007 DE 102007052152
(71) Anmelder: ROBERT BOSCH GMBH, 70442 Stuttgart (DE)
(72) Erfinder: Anders, Bernward, 31139, Hildesheim (DE)

(57) **Zusammenfassung**

Ein Verfahren zum spanenden Bearbeiten eines Durchgangslochs (20) in einem Werkstück (2) mit einem spanenden Werkzeug, dadurch gekennzeichnet, dass auf der dem Werkzeug abgewandten Seite des Werkstücks (2) eine Kappe (1) zum Auffangen von durch das Durchgangsloch (20) fallenden Spänen angesetzt wird sowie eine Auffangkappe (1) zum Auffangen von bei einer spanenden Bearbeitung einer Durchgangsbohrung (20) eines Werkstücks (2) anfallenden Spänen mit einem Auffangtopf (11,12,13) zum Auffangen der Späne und mit Mitteln (14) zur Befestigung der Auffangkappe (1) am Werkstück (2).

## Beschreibung

### Stand der Technik

Die Erfindung geht von einer Anordnung und einem Verfahren nach der Gattung des unabhängigen Patentanspruchs aus.

Aus der DE 37 00 499 A1 ist eine bohrende und selbstschneidende Schraube bekannt, die eine Bohrspitze mit Schneidkanten zum Bohren eines Loches in ein Werkstück und einen Gewindeschaft zum Versehen des Bohrloches mit einem Gewinde und zur formschlüssigen Verbindung mit dem geschnittenen Gewinde aufweist. Die Schneidkanten dieser Schraube sind dabei derart ausgeformt, dass sich beim Bohren des Bohrloches vorzugsweise ein durchgehender Span bildet. Dies soll bewirken, dass die Spitze der Schraube in das gebohrte Material gezogen wird, so dass sich eine verbesserte Leistung und kürzere Bohrzeiten erzielen lassen.

Alternativ werden Schrauben mit Gewindeschaft verwendet, die ein Gewinde in ein bereits vorhandenes Bohrloch schneiden.

Solche Schrauben werden insbesondere in der Massenfertigung beispielsweise zur Verschraubung von Blechen, insbesondere auch zur Verschraubung von Blechgehäusen elektronischer Geräte verwendet. Nachteilig an der Verwendung dieser Schrauben ist, dass spätestens beim Einschneiden des Gewindes in das Bohrloch, weitere, nicht zusammen hängende Späne anfallen, die zumindest teilweise in das Bohrloch hineinfallen. Da bei der Endmontage solcher Geräte dessen elektronische Komponenten, insbesondere Leiterplatten und dergleichen, bereits im Gehäuse enthalten sind, besteht die Gefahr, dass im Falle metallischer Gehäuse diese Späne auf einer Leiterplatte des elektronischen Geräts im späteren Betrieb Kurzschlüsse oder andere Fehlfunktionen auslösen.

### Vorteile der Erfindung

Die Erfindung mit den Merkmalen der unabhängigen Patentansprüche hat demgegenüber den Vorteil, dass für die Verschraubung von metallischen Gehäusen oder Bauteilen elektronischer Geräte selbstschneidende Schrauben verwendet werden können, ohne dass die dabei anfallenden Späne Fehlfunktionen der Geräte im späteren Betrieb verursachen.

Dies wird erfindungsgemäß durch eine Kapselung der zukünftigen Gewindelöcher vor deren spanender Bearbeitung erreicht, welche Kapselung anfallende und durch das Bohrloch fallende Späne auffängt. Hierzu ist erfindungsgemäß eine Kappe vorgesehen, die auf der dem Werkzeug abgewandten Seite des Werkstücks zum Auffangen von durch das Durchgangsloch fallenden Spänen angesetzt wird. Diese Kappe weist einen Auffangtopf zum Auffangen der Späne und Mittel zur Befestigung am Werkstück auf.

Die Erfindung eignet sich besonders zur Verschraubung von metallischen Gerätegehäusen mittels selbstschneidender Schrauben.

Die Erfindung eignet sich daneben grundsätzlich für eine spanenden Bearbeitung von Durchgangslöchern für den Fall, dass ein Durchfallen von Bearbeitungsspänen durch das Werkstück verhindert werden soll.

Die Kappe wird dabei vorteilhaft formschlüssig mit dem Werkstück verbunden und verbleibt vorzugsweise auch nach Abschluss der spanenden Bearbeitung des Werkstücks am Werkstück. Dies ermöglicht insbesondere bei der Montage von Geräten mit metallischen Gehäusen die Anfertigung von Gewinden zur Verschraubung des Gerätegehäuses und die Verschraubung des Gehäuses in einem einzigen Arbeitsgang.

Zur Befestigung der Kappe am Werkstück werden um das Durchgangsloch herum vorteilhaft weitere Durchbrüche in das Werkstück eingebracht, in die Zapfen der Kappe eingesetzt werden, welche zur Befestigung der Kappe an dem Werkstück in den Durchbrüchen verformt werden. Vorteilhaft können diese weiteren Durchbrüche zusammen mit weiteren Durchbrüchen im Gehäuse, wie etwa Kühlschlitzen oder Durchbrüchen für Kabelbäume oder dergleichen, in einem gemeinsamen Stanzvorgang eingebracht werden.

Die Zapfen der Kappe bestehen vorzugsweise aus einem plastisch verformbaren Material und werden durch plastisches Verformen in den Durchbrüchen des Werkstücks verstemmt. Dies kann insbesondere durch thermisches, kaltes oder Ultraschall-Verschweißen oder -Verformen oder dergleichen erfolgen.

Vorteilhaft werden die Durchbrüche des Werkstücks an der der Kappe abgewandten Seite des Werkstücks mit Anfasungen versehen, welche durch Verformung der Zapfen der Kappe verdrängtes Material aufnehmen. Die Anfasungen werden vorzugsweise in einem kombinierten Stanz- und Pressprozess in das Werkstück eingebracht.

Vorteilhaft ist die Auffangkappe derart ausgebildet, dass die Tiefe des Topfes größer als dessen Durchmesser oder längste Seitenkante ist. Weiterhin laufen im Falle einer Kappe zumindest annähernd eckigen Querschnitts vorteilhaft die Seitenwände des Topfes zum Topfboden hin aufeinander zu. Im Falle eines runden, ovalen oder dergleichen Querschnitts des Topfes ist dieser vorteilhaft derart ausgebildet, dass sich dessen Durchmesser zum Boden hin verjüngt. Dies hat den besonderen Vorteil, dass die Kappen bei Zufuhr zum Werkstück mit einem automatischen Zuführsystem automatisch in die korrekte Position gebracht werden können.

### Zeichnungen

Ausführungsbeispiele der Erfindung sind in den Figuren dargestellt und werden nachfolgend näher erläutert. Gleiche Bezugszeichen bezeichnen dabei gleiche oder gleichwirkende Elemente.

Es zeigen
Figur 1 einen Schnitt durch die Gesamtanordnung aus Werkstück, Kappe und Schraube,
Figur 2 Ausschnitt A aus Figur 1 vergrößert,
Figuren 3A und 3B perspektivische Ansichten einer vorteilhaften Ausführungsform der Kappe,
Figur 4 die Ansicht der dem Werkzeug bzw. der Schraube zugewandten Oberfläche des zu bearbeitenden Werkstücks, durch dessen Durchbrüche die noch zu verstemmenden Zapfen der Kappe hindurchragen und
Figuren 5A, 5B, 5C und 5D technische Zeichnungen der Kappe mit beispielhaften Bemaßungen.

### Beschreibung der Ausführungbeispiele

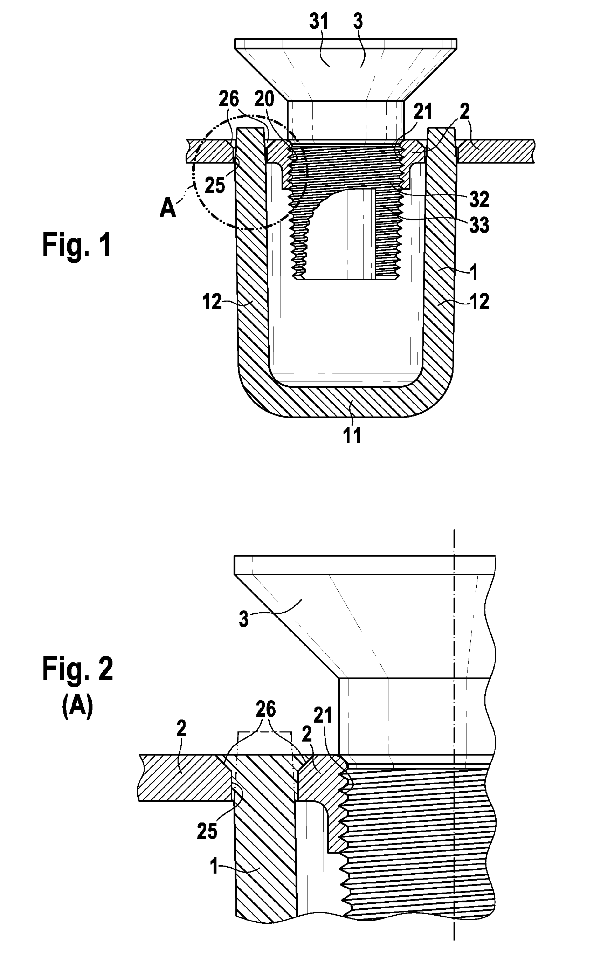

In Figur 1 ist ein Schnitt durch die Gesamtordnung aus Werkstück 2, Kappe 1 und Schraube 3 dargestellt. Das Werkstück 2 kann beispielsweise ein metallisches Gehäuseteil eines elektrischen geräts, beispielsweise eine Fahrzeugnavigationssystems oder eine Autoradiogeräts oder eine elektronischen kraftfahrtechnisches Steuergeräts sein. Dieses Werkstück 2 weist ein Durchgangsloch 20 auf, in das eine selbstschneidende Schraube 3 eingeschraubt wird. Die Schraube 3 dient beispielsweise der Befestigung eines weiteren Gehäuseteils auf dem dargestellten Gehäuseteil 2.

Die selbstschneidende Schraube 3 weist in an sich bekannter Weise einen Schneidabschnitt 33 auf, der dazu dient, das Durchgangsloch 20 des Werkstücks aufzureiben und ein Gewinde 21 an den Kanten des Loches 20 zu schneiden. Auf den Schneidabschnitt 33 folgt der eigentliche Gewindeabschnitt 32, der mit dem zuvor geschnittenen Gewinde 21 im Werkstück eine Schraubverbindung bildet. Zum Antrieb der Schraube dient in an sich bekannter Weise eine Schraubenkopf 31 mit einer nicht dargestellten Werkzeugaufnahme, beispielsweise einem Kreuzschlitz, Typ "PZ".

Beim Schneiden des Gewindes 21 in das Werkstück 2 mittels der Schraube 3 entstehen Späne, die durch das Durchgangsloch 20 des Werkstücks hindurchfallen können. Sofern es sich bei dem Werkstück um ein metallisches Gehäuseteil eines elektrischen Geräts handelt, können diese Späne auf einer darunter liegenden Leiterplatte des Geräts Kurzschlüsse und Fehlfunktionen verursachen.

Um dies zu verhindern, wird an der dem Bohr- und Schneidwerkzeug, hier insbesondere der Zuführseite der Schraube 3 abgewandten Seite des Werkstücks 2 - in der Figur 1 unten - eine Kappe 1 angeordnet, die beim Schneiden des Gewindes 21 entstehende Späne auffängt. Vorzugsweise ist diese Kappe 1 so ausgebildet, dass ihr Auffangtopf, welcher durch die Seitenwände 12 und den Topboden 11 gebildet wird, bündig mit dem Werkstück 2 abschließt. Dazu weist der Auffangtopf 11, 12 der Kappe 1 im vorliegenden Fall einen geraden Rand 13 auf, der bündig mit dem Werkstück 2 abschließt.

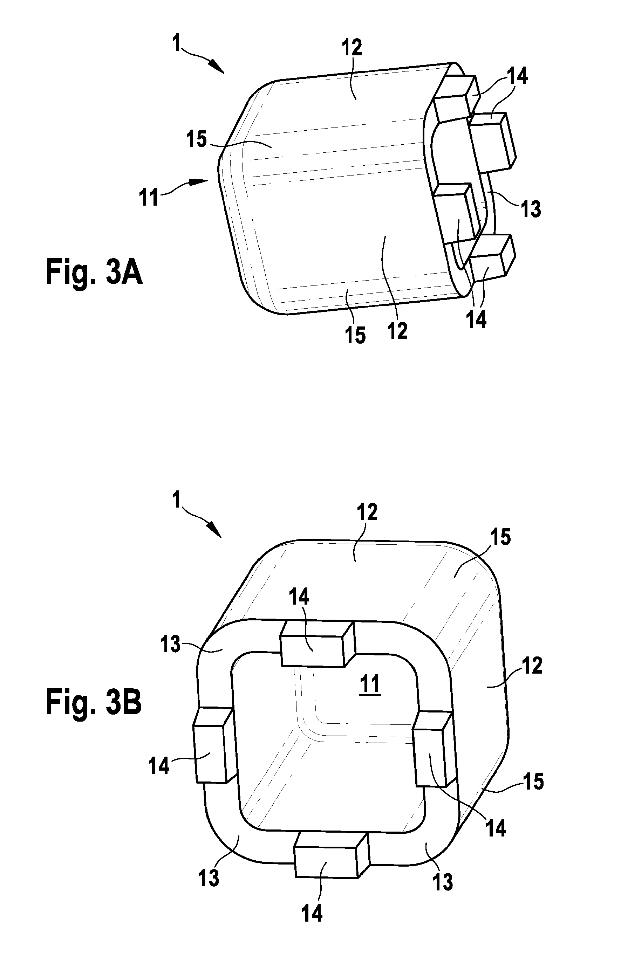

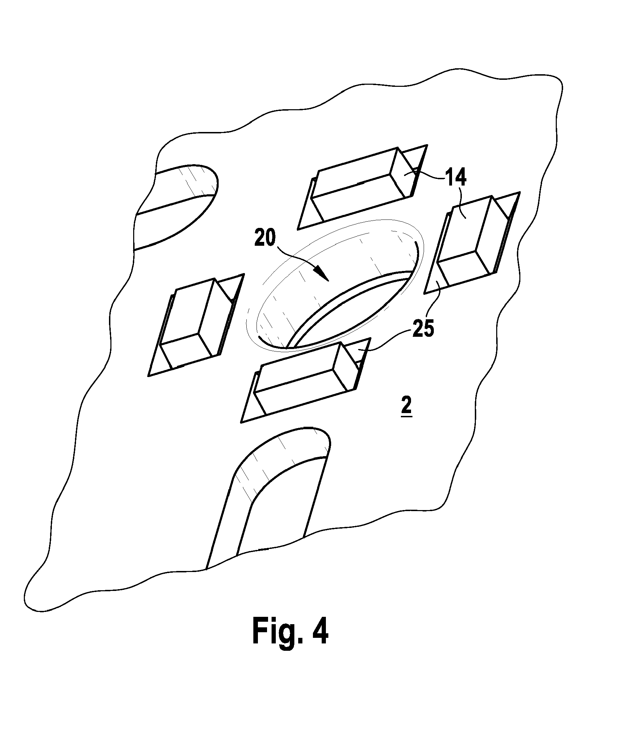

Die Kappe 1 weist weiterhin an den Topfrand 13 angeformte Zapfen (Figur 3A, 3B, 4, 5) auf, die durch Durchbrüche 25 des Werkstücks hindurchragen. Diese Zapfen 14 dienen der Befestigung und Halterung der Kappe 1 am Werkstück 2. Vorzugsweise sind die Zapfen aus einem plastischen Material gefertigt, so dass diese in den Durchbrüchen 25 durch Verformen verstemmt werden können. Vorzugsweise ist die gesamte Kappe 1 aus demselben Material, beispielsweise einem thermoplatischen Werkstoff gefertigt, wobei die Zapfen 14 durch thermisches Verschweißen in den Durchbrüchen 25 verstemmt werden. Alternativ kommen andere Werkstoffe wie auch andere Verbindungsverfahren, wie Kaltverformung der Zapfen 14 oder Verschweißung durch Ultraschall oder Laser oder dergleichen in Betracht.

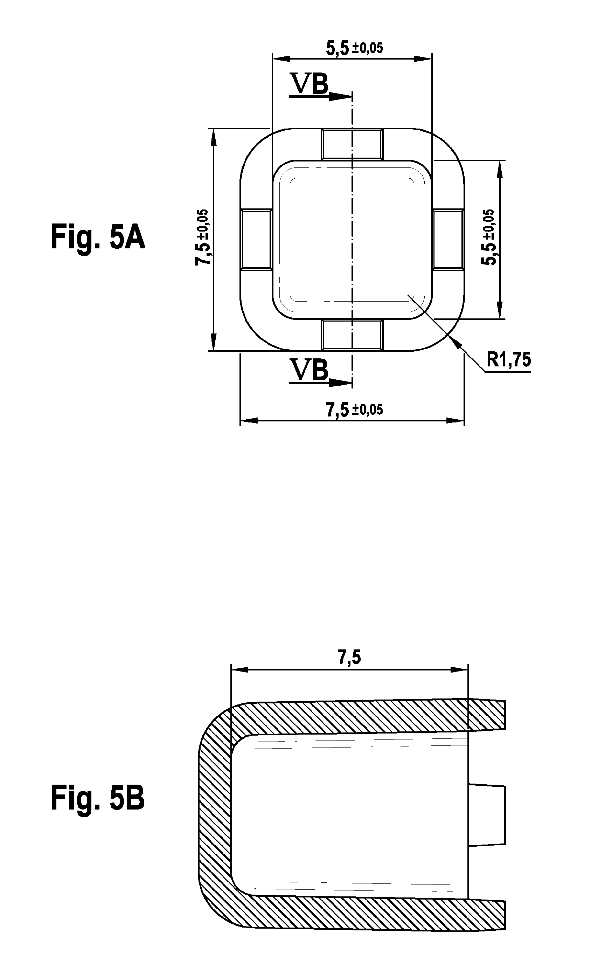

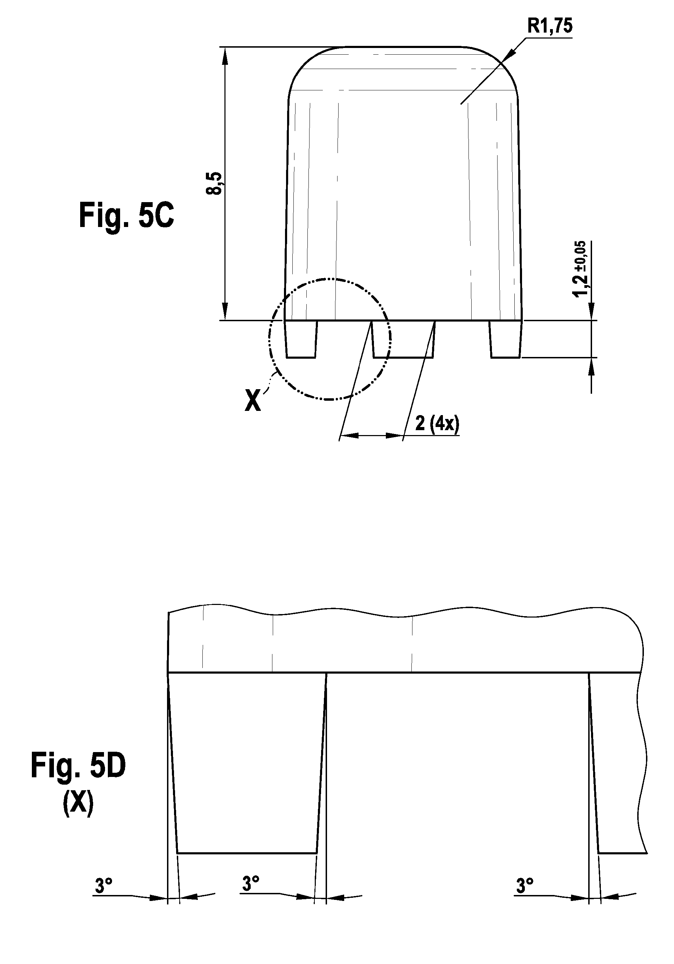

Die Tiefe des Auffangtopfes, der durch die Seitenwände 12 und den Topfboden 11 gebildet wird, ist nach der Länge der verwendeten Schrauben zu wählen. Vorzugsweise werden dazu Kappen verschiedener Topftiefen, daneben zur Anpassung an verschiedene Schraubendurchmesser auch verschiedener Seitenwandbreiten oder Durchmesser vorgehalten. Ein Beispiel einer realen Kappe ist mit Bemaßung in den Figuren 5A bis 5D dargestellt. Die angegebenen Maße sind nur beispielhaft, abweichende Dimensionierungen und Querschnitte des Topfes, wie etwa Mehreckig, rund, oval oder dergleichen, liegen im Bereich der Erfindung. Auch andere Höhen-/Breitenverhältnisse sind möglich und im Bereich der Erfindung.

Vorteilhaft ist die Tiefe des Topfes 11, 12 regelmäßig größer als dessen Durchmesser oder Seitenwandbreite. Dies hat den Vorteil, dass bei automatischer Zufuhr der Kappe zum Werkstück mit einem automatischen Bestücker die Kappe 1 bei Verwendung eines passend ausgelegten Werkstückhalters stets in die korrekte Bestückungsposition gelangt. Einer optimierten automatischen Ausrichtung der Kappe im Werkstückhalter dient auch deren annähernd vorteilhaft zumindest im Wesentlichen konischer Querschnitt sowie die Abrundungen der durch die Seitenwände 12 gebildeten Kanten 15. Mit konischem Querschnitt ist hier eine Verjüngung der Kappe zum Topfboden 11 hin gemeint.

Zur Aufnahme von bei Verformung der Zapfen 14 verdrängtem Material sind die Durchbrüche 25 des Werkstücks 2 auf der dem Werkzeug zugewandten bzw. der der Kappe 1 abgewandten Seite, also insbesondere der Gehäuseaußenseite (in Figur 1 oben), mit Anfasungen 26 versehen. Diese Anfasungen bilden ein Reservoir zur Aufnahme verdrängten Zapfenmaterials.

Die Durchbrüche 25 wie auch das Durchgangsloch 20 können in einem Stanzvorgang insbesondere zusammen mit weiteren Durchbrüchen, wie Kühlschlitzen, Kabeldurchführungen und dergleichen, in das Werkstück eingebracht werden. Die Anfasungen 26 können beispielsweise im Anschluss an das Stanzen der Durchbrüche 25 in einem Pressvorgang in das Werkstück 2 eingebracht werden. Alternativ können die Anfasungen 26 und die Durchbrüche 25 sowie weitere Durchbrüche und das Durchgangsloch 20 in einem gemeinsamen Stanz- und Pressvorgang in das Werkstück 2 eingebracht werden.

## Patentansprüche

1. Verfahren zum spanenden Bearbeiten eines Durchgangslochs (20) in einem Werkstück (2) mit einem spanenden Werkzeug,
**dadurch gekennzeichnet,**
**dass** auf der dem Werkzeug abgewandten Seite des Werkstücks (2) eine Kappe (1) zum Auffangen von durch das Durchgangsloch (20) fallenden Spänen angesetzt wird.

2. Verfahren nach Anspruch 1, **dadurch gekennzeichnet, dass** die Kappe (1) formschlüssig und vorzugsweise zum Verbleib am Werkstück (2) mit dem Werkstück verbunden wird.

3. Verfahren nach einem der vorhergehenden Ansprüche, **dadurch gekennzeichnet, dass** um das Durchgangsloch (20) herum weitere Durchbrüche (25) in das Werkstück (2) eingebracht werden, und dass Zapfen (14) der Kappe (1) in diese Durchbrüche (25) eingesetzt und zur Befestigung der Kappe (1) an dem Werkstück (2) in den Durchbrüchen (25) verformt werden.

4. Verfahren nach Anspruch 3, **dadurch gekennzeichnet, dass** die Durchbrüche (25) auf der der Kappe (1) abgewandten Seite des Werkstücks (2) mit Anfasungen (26) versehen werden, welche durch Verformung der Zapfen (14) der Kappe verdrängtes Material aufnehmen.

5. Auffangkappe (1) zum Auffangen von bei einer spanenden Bearbeitung einer Durchgangsbohrung (20) eines Werkstücks (2) anfallenden Spänen mit einem Auffangtopf (11, 12, 15) zum Auffangen der Späne und mit Mitteln (14) zur Befestigung der Auffangkappe (1) am Werkstück (2).

6. Auffangkappe (1) nach Anspruch 5, **gekennzeichnet durch** Zapfen (14) zur Durchführung **durch** und Halterung in Aufnahmebohrungen (25) des Werkstücks.

7. Auffangkappe (1) nach Anspruch 6, **dadurch gekennzeichnet, dass** die Zapfen (14) aus einem plastisch verformbaren, insbesondere thermoplastischen, Werkstoff bestehen.

8. Auffangkappe (1) nach einem der vorhergehenden Ansprüche, **dadurch gekennzeichnet, dass** Tiefe des Topfes (11, 12, 15) größer als dessen Durchmesser oder längste Seitenkante ist.

9. Auffangkappe (1) nach einem der vorhergehenden Ansprüche, **dadurch gekennzeichnet, dass** die Seitenwände (12) des Topfes zum Topfboden (11) hin aufeinander zulaufen oder dass sich der Durchmesser des Topfes zum Topfboden (11) hin verringert.
